# EUROPEAN PATENT APPLICATION

(11) **EP 4 243 154 A1**
(43) Date of publication of application: **13.09.2023**
(21) Application number: 21891765.6
(22) Date of filing: 04.11.2021
(51) Int. Cl.: H01M 10/42, H01M 10/44, H02J 7/02, H02J 7/04

(54) **LEAD-ACID BATTERY REGENERATION DEVICE**

(30) Priority: 11.11.2020 JP 2020188357
(71) Applicant: Nasu, Yoshikatsu, Hyogo, 662-0045 (JP)
(72) Inventor: TSUBATA, Takeshi, Kawasaki-shi, Kanagawa 212-0024 (JP)
(74) Representative: Isarpatent
(86) International application number: PCT/JP2021/040678
(87) International publication number: WO 2022/102519

(57) **Abstract**

Provided is a lead-acid battery regeneration device allowing the reuse of a lead-acid battery in a short time by electrochemically decomposing and reducing a crystallized lead sulfate insulator (sulfation) of the lead-acid battery. A lead-acid battery regeneration device 100 is for regenerating a lead-acid battery 18 by electrochemically decomposing and reducing a crystallized lead sulfate insulator of the lead-acid battery 18. The lead-acid battery regeneration device 100 includes: a charge circuit 17 that includes a capacitor and is configured to apply electric charge to the capacitor; and a discharge switch circuit 19 configured to apply a pulse voltage to the lead-acid battery 18 by controlling ON/OFF of the charge circuit 17. The charge circuit 17, the lead-acid battery 18, and the discharge switch circuit 19 are connected in series to configure a series resonant circuit 30. One application of the pulse voltage with a predetermined frequency to the lead-acid battery 18 causes a resonance phenomenon of an Nth-order harmonic in the lead-acid battery 18 where N is an integer greater than or equal to one, the lead-acid battery regeneration device regenerating the lead-acid battery 18 by repeatedly performing the application of the pulse voltage to the lead-acid battery 18.

## Description

### TECHNICAL FIELD

The present invention relates to a lead-acid battery regeneration device, and more particularly to a lead-acid battery regeneration device that removes lead sulfate crystallized on electrode surfaces of a lead-acid battery to regenerate the lead-acid battery to a chargeable state.

### BACKGROUND ART

In recent years, lead-acid batteries have been widely used as storage batteries for solar and wind power generation and disaster-prevention facilities or as a backup power supply at the time of power supply stop due to blackout or other reasons at mobile phone base stations.

Such the lead-acid battery has the following problem: Increase in the number of charge and discharge cycles and self-discharge while the lead-acid battery is being left result in a lower concentration of dilute sulfuric acid, which generates a crystallized lead sulfate insulator (hereinafter also referred to as "sulfation") on the surfaces of lead electrodes. This sulfation reduces the surface areas of the lead electrodes that are involved in charging and discharging, which leads to increase in the internal resistance value and reduction in the charge capacity, resulting in a lower storage capacity. Once sulfation occurs, it is impossible with the voltage of a typical charger to perform the reduction of lead sulfate to lead dioxide at the anode and lead and dilute sulfuric acid at the cathode. Out of the deterioration in lead-acid batteries, sulfation-induced phenomena account for about 80%. The phenomena caused by thermal stress at the time of charge and discharge, peeling off of the lead active material due to stress, and external physical damages account for the rest about 20%. The longer a lead-acid battery is left, the thicker the sulfation becomes. It takes thus a considerable time to remove the sulfation. In addition, as an urgent issue related to sustainable energy, it is now necessary to take measures against a decrease in the capacities of storage batteries for solar and wind power generation and disaster-prevention facilities without any delay.

Specifically, as a technique of storage battery regeneration, a pulse regeneration method is well known at present. According to this method, a current flows through an inductor (coil) for a short time, and is then instantaneously cut off. A noticeably short pulse (50 ns to 200 ns), which has been generated by a back electromotive force, is applied to a lead-acid battery for regeneration. In this method, lengthy regeneration (several weeks to several months) is unavoidable due to its weak pulse energy. In addition, a regeneration device always needs to be attached to a storage battery, which results in a concern about negative influences on devices associated with a load (e.g., an influence on a microcomputer of an automobile). Furthermore, this method is not suitable for regenerating batteries, such as large deep cycle batteries, having high lead masses. Another regeneration method is a method for forcibly charging and discharging a deteriorated storage battery. This method also requires a long time for charging and discharging (about 15 hours) and a large amount of electric power for large-sized storage batteries. Thus, this method involves a need to address increase in the size of a regeneration device and heat during discharge. Further another regeneration method is a method for applying high-frequency power to a lead electrode. This method also requires large electric power (about 500 W) and a long time (about couple of days) for regeneration.

For example, Patent Document 1 discloses a regeneration device that carries out oxidation reduction by recharge current on lead oxide on a cathode and on lead on an anode by finely decomposing poorly conducting crystals by selective dielectric relaxation loss heating of lead sulfate at the lead sulfate dielectric relaxation loss peak frequency of 10 MHz, removing a lead sulfate insulator crystal film. The regeneration device of Patent Document 1 heats and dissolves the sulfation from the surface using a high frequency skin effect. The skin effect however allows for dissolution of the surface of the sulfation but leaves the inside crystallized firmly, which results in failure of flow of a direct charge current. Further, lead sulfate cannot be reduced to lead or lead oxide. Accordingly, the dissolved sulfation hardens and crystallizes again at electrodes. An innovative technique is thus needed for supplying a charge current to the firmly hardened sulfation in the inside.

In addition, the regeneration device of Patent Document 1 requires several days to remove sulfation of a lead-acid battery which has been used for a long time and significantly deteriorated, which is extremely inefficient, so that it is not desirable to use the regeneration device to regenerate the lead-acid battery in an actual operation. Hence, there is a demand for an efficient lead-acid battery regeneration device capable of regenerating a deteriorated lead-acid battery within a few hours.

### CITATION LIST

### PATENT DOCUMENT

Patent Document 1: Japanese Patent No. 4565362

### SUMMARY OF THE INVENTION

### TECHNICAL PROBLEMS

The present invention was made in view of the problems described above. It is an objective of the present invention to provide a lead-acid battery regeneration device allowing for reuse of a lead-acid battery in a short time by electrochemically decomposing and reducing a crystallized lead sulfate insulator (sulfation) of the lead-acid battery.

### SOLUTION TO THE PROBLEMS

After repeating various experiments to solve the problems of the methods described above, the present inventor has found the following. The pulse method allows for generation of a large regenerating power with low power consumption (e.g., about 30 W) and causes a resonance phenomenon inside a lead-acid battery by applying a one-pulse voltage. The inventor has invented a lead-acid battery regeneration device with an innovative configuration for electrochemically decomposing and reducing the sulfation utilizing this resonance phenomenon.

Specifically, one aspect of the present invention is directed to
a lead-acid battery regeneration device for regenerating a lead-acid battery by electrochemically decomposing and reducing a crystallized lead sulfate insulator of the lead-acid battery. The lead-acid battery regeneration device includes:
a charge circuit that includes a capacitor and is configured to apply electric charge to the capacitor; and
a discharge switch circuit configured to apply a pulse voltage to the lead-acid battery by controlling ON/OFF of the charge circuit.

The charge circuit, the lead-acid battery, and the discharge switch circuit are connected in series to constitute a series resonant circuit.

The lead-acid battery regeneration device generates the lead-acid battery through repetitive applications, each applying the pulse voltage with a predetermined frequency to the lead-acid battery to cause a resonance phenomenon of an Nth-order harmonic, where N is an integer of one or more, in the lead-acid battery.

The lead-acid battery regeneration device of the present invention further includes:
a charge circuit configured to charge the lead-acid battery with electric power of a predetermined power supply.

The lead-acid battery is regenerated while being charged by the charge circuit.

According to the lead-acid battery regeneration device of the present invention,
in the lead-acid battery after being applied with the pulse voltage, the resonance phenomenon includes: a fundamental frequency band including a first harmonic of the Nth-order harmonic; and a harmonic band following the fundamental frequency band and including a third or higher harmonic of the first harmonic. The first harmonic and the third or higher harmonic attenuate over time.

### ADVANTAGES OF THE INVENTION

The lead-acid battery regeneration device of the present invention allows for electrochemical decomposition and reduction of a crystallized lead sulfate insulator (sulfation) of the lead-acid battery by causing a resonance phenomenon in the lead-acid battery, thereby making it possible to regenerate the lead-acid battery in a short time.

### BRIEF DESCRIPTION OF THE DRAWINGS

FIG. 1 is a block diagram showing a schematic configuration of a lead-acid battery regeneration device, for regenerating a deteriorated lead-acid battery, of an embodiment of the present invention.
FIG. 2 shows an exemplary oscilloscope waveform (waveform of a resonant harmonic) between positive and negative electrodes of a lead-acid battery of 12 V that is being regenerated by the lead-acid battery regeneration device.
FIG. 3 shows an exemplary oscilloscope waveform (waveform of a resonant harmonic) between positive and negative electrodes of a lead-acid battery of 24 V that is being regenerated by the lead-acid battery regeneration device.
FIG. 4A is a photograph of a voltage waveform as an exemplary oscilloscope waveform (waveform of a resonant harmonic) between positive and negative electrodes of a lead-acid battery of 12 V that is being regenerated by the lead-acid battery regeneration device.
FIG. 4B is a photograph of a voltage waveform as an exemplary oscilloscope waveform (waveform of a resonant harmonic) between positive and negative electrodes of a lead-acid battery of 24 V that is being regenerated by the lead-acid battery regeneration device.

An embodiment of the present invention will be described below with reference to the drawings.

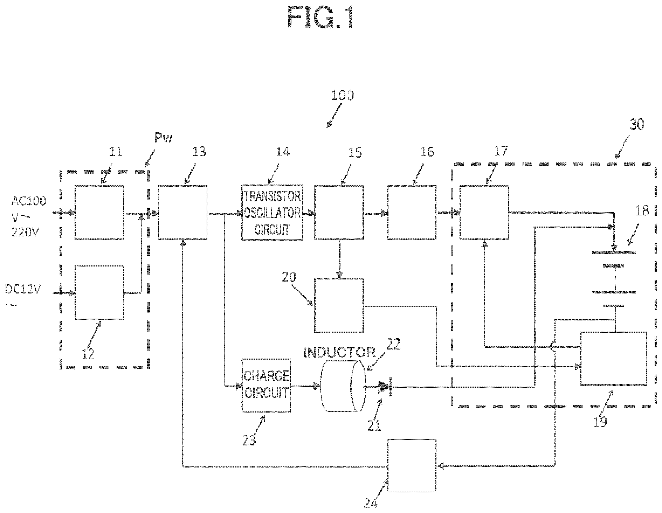

FIG. 1 is a block diagram showing a schematic configuration of a lead-acid battery regeneration device 100, for regenerating a deteriorated lead-acid battery 18, of an embodiment of the present invention.

A configuration and an operation of the lead-acid battery regeneration device 100 will be described with reference to FIGS. 1 to 4B.

As shown in FIG. 1, the lead-acid battery regeneration device 100 (hereinafter, also simply referred to as the regeneration device 100) includes a power supply Pw that is built-in. A DC-DC converter 12 or a conversion power supply 11 is applicable as the power supply Pw. The conversion power supply 11 receives electric power from a commercial AC power supply (e.g., AC of 100 V to 220 V) and converts the AC electric power into a DC electric power (e.g., DC of 16 V). The regeneration device 100 is connected to the deteriorated lead-acid battery 18, which is a target of regeneration, through a predetermined power supply cable.

As shown in FIG. 1, the regeneration device 100 includes a power-off circuit 13 in case of disconnection or anomaly, a transistor oscillator circuit 14, a step-up transformer 15, a rectifier circuit 16, a charge circuit 17, a discharge switch circuit 19, a discharge timing circuit 20, an anti-reverse DC diode 21, an anti-high-frequency backflow coil (inductor) 22, a charge circuit 23, and a disconnection/anomaly detection circuit 24.

In FIG. 1, a section with reference character 30 surrounded by a broken line indicates a series resonant circuit 30 configured by connecting the charge circuit 17, the lead-acid battery 18, and the switch circuit 19 in series. The series resonant circuit 30 resonates at a predetermined resonant frequency which will be described later.

The power-off circuit 13 in case of disconnection or anomaly cuts off the supply of electric power from the power supply (i.e., the conversion power supply 11 or the DC-DC converter 12) to reduce an electric shock when the power supply cable connecting the regeneration device 100 and the lead-acid battery 18 is disconnected or once an anomaly is detected.

The DC-DC converter 12 is of an insulated type, for example, but not particularly limited thereto and may be of a non-insulated type, for example.

The transistor oscillator circuit 14 generates and outputs an oscillation signal with a predetermined constant frequency (e.g., 11 kHz in this embodiment). Included in the transistor oscillator circuit 14 may be field effect transistors (FETs), for example.

The rectifier circuit 16 rectifies a voltage boosted by the step-up transformer 15 into a direct current.

The charge circuit 17 includes a capacitor (not shown), applies electric charge to the capacitor with direct current output from the rectifier circuit 16, and releases the electric charge thus applied in accordance with an ON/OFF control signal from the discharge switch circuit 19. The discharge switch circuit 19 outputs the ON/OFF control signal to the charge circuit 17, releases electric charge from the capacitor of the charge circuit 17, and performs control for applying a pulse voltage to the lead-acid battery 18.

The discharge timing circuit 20 controls the times of controlling the ON/OFF of the discharge switch circuit 19. The discharge timing circuit 20 is an example of a trigger circuit.

The anti-reverse DC diode 21 and the anti-high-frequency backflow coil 22 reduce the backflow of the pulse voltage applied to the lead-acid battery 18.

The charge circuit 23 charges the lead-acid battery 18 at a predetermined DC voltage (e.g., DC of 2 V to 48 V) supplied from the conversion power supply 11 or the DC-DC converter 12.

The disconnection/anomaly detection circuit 24 is connected to the power-off circuit 13 and transmits a detection signal to the power-off circuit 13 when the power supply cable connecting the regeneration device 100 and the lead-acid battery 18 is disconnected or when an anomaly (e.g., a short circuit) is detected.

The transistor oscillator circuit 14, the step-up transformer 15, the rectifier circuit 16, and the charge circuit 17 are inserted in series in the current path between the power supply Pw and the positive electrode of the lead-acid battery 18 whose negative electrode is connected to the discharge switch circuit 19.

Note that the power-off circuit 13 and the disconnection/anomaly detection circuit 24 are provided as necessary and are not essential components of the regeneration device 100.

In addition, the lead-acid battery regeneration device 100 operates with low power consumption (e.g., 30 W) when regenerating the lead-acid battery 18. The lead-acid battery regeneration device 100 can be supplied with a DC voltage from a commercial power supply of 100 V or an automobile storage battery of 12 V. Accordingly, the lead-acid battery regeneration device 100 is reducible in size and weight, highly portable, and capable of performing a regeneration operation regardless of the types and locations of lead-acid batteries.

### [Operation of Lead-Acid Battery Regeneration Device 100 (How to Regenerate Lead-Acid Battery 18)]

Next, an operation of regenerating the deteriorated lead-acid battery 18 using the lead-acid battery regeneration device 100 will be described. In this embodiment, the lead-acid battery regeneration device 100 and the lead-acid battery 18 to be regenerated are connected by a predetermined electric wire cable.

First, a DC voltage (e.g., DC of 16 V to 60 V) is supplied from the conversion power supply 11 or the DC-DC converter 12 through the power-off circuit 13 to the charge circuit 23.

Next, electricity is supplied from the charge circuit 23 through the anti-high-frequency backflow coil (inductor) 22 and the anti-reverse DC diode 21 to the lead-acid battery 18. At this time, the disconnection/anomaly detection circuit 24 detects whether the electric wire cable is disconnected or short-circuited.

Next, while the charging of the lead-acid battery 18 is executed normally, a pulse voltage with a predetermined frequency (e.g., 11 kHz in this embodiment) is applied to the lead-acid battery 18 for each ON control signal of the discharge switch circuit 19 under control by the discharge timing circuit 20 through the route of the transistor oscillator circuit 14, the step-up transformer 15, the rectifier circuit 16, the charge circuit 17, the lead-acid battery 18, and the discharge switch circuit 19. As will be described in detail later, one application of the pulse voltage to the lead-acid battery 18 causes a resonance phenomenon of an Nth-order harmonic where N is an integer greater than or equal to one. The lead-acid battery 18 can be regenerated while the crystallized sulfate is peeled off or dissolved from the lead electrodes of the lead-acid battery 18 by repeatedly performing the application of the pulse voltage to the lead-acid battery 18. In this embodiment, regeneration of the lead-acid battery 18 utilizing a resonance phenomenon occurring in the lead-acid battery 18 is referred to as a "resonance regeneration method".

The pulse voltage is suitably applied to a lead-acid battery about 8000 times to 12000 times per second.

Next, the resonance phenomenon in the lead-acid battery 18 found by the present inventor will be described in detail. This resonance phenomenon can be confirmed by connecting a probe of an oscilloscope between the positive and negative electrodes of the lead-acid battery 18 that is being regenerated by the lead-acid battery regeneration device 100 and observing change in the waveform of a voltage.

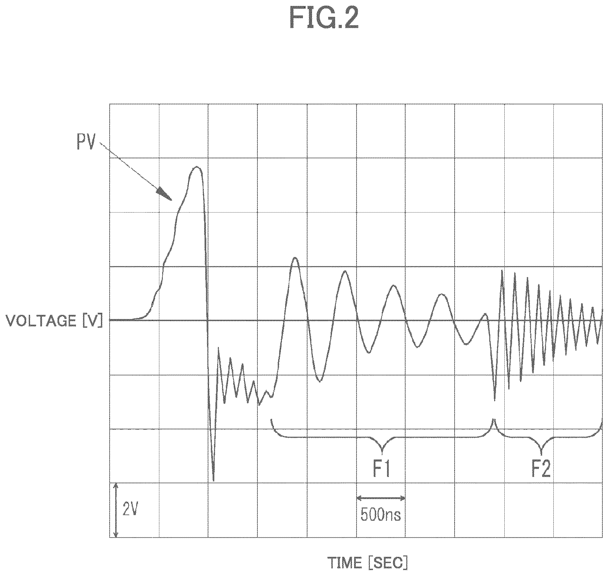

FIG. 2 shows an exemplary oscilloscope waveform (waveform of a resonant harmonic) between positive and negative electrodes of a lead-acid battery 18 of 12 V that is being regenerated by the lead-acid battery regeneration device 100. In FIG. 2, the vertical axis accounts for a voltage [V]. Each square represents 2 V and the total length of the vertical axis accounts for 16 V The horizontal axis accounts for the time [sec]. Each square represents 500 ns and the total length of the horizontal axis accounts for 5 µs.

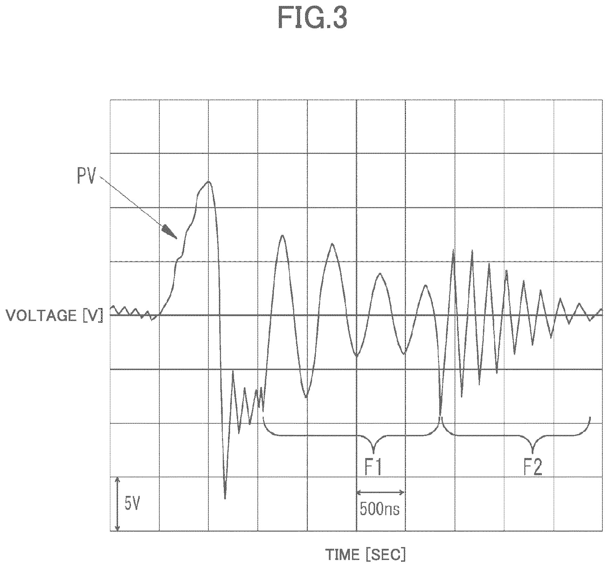

FIG. 3 shows an exemplary oscilloscope waveform (waveform of a resonant harmonic) between positive and negative electrodes of a lead-acid battery 18 of 24 V being regenerated by the lead-acid battery regeneration device 100. In FIG. 3, the vertical axis accounts for a voltage [V]. Each square represents 5 V and the total length of the vertical axis accounts for 40 V. The horizontal axis accounts for the time [sec]. Each square represents 500 ns and the total length of the horizontal axis accounts for 5 µs.

The center of the horizontal axis in each of FIGS. 2 and 3 indicates the voltage (12 V in FIG. 2 and 24 V in FIG. 3) of the lead-acid battery.

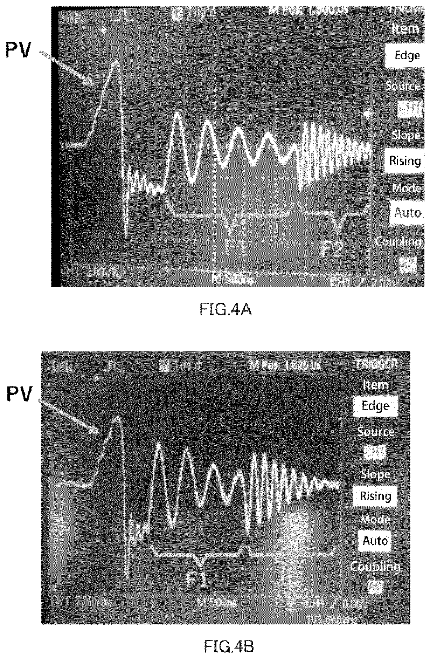

FIG. 4A is a photograph of a voltage waveform as an exemplary oscilloscope waveform (waveform of a resonant harmonic) between positive and negative electrodes of a lead-acid battery of 12 V that is being regenerated by the lead-acid battery regeneration device. In the oscilloscope image in FIG. 4A, the horizontal axis accounts for the time (each square represents 500 ns and the total length of the horizontal axis accounts for 5 µs). The vertical axis accounts for the voltage (each square represents 2 V and the total length of the vertical axis accounts for 16 V).

FIG. 4B is a photograph of a voltage waveform as an exemplary oscilloscope waveform (waveform of a resonant harmonic) between positive and negative electrodes of a lead-acid battery of 24 V that is being regenerated by the lead-acid battery regeneration device. In the oscilloscope image in FIG. 4B, the horizontal axis accounts for the time (each square represents 500 ns and the total length of the horizontal axis accounts for 5 µs). The vertical axis accounts for a voltage (each square represents 5 V and the total length of the vertical axis accounts for 40 V).

As shown in FIGS. 2 and 3, each time a pulse voltage (with a pulse width of about 0.55 µs to about 0.7 µs) with a predetermined frequency (e.g., 11 kHz in this embodiment) is applied to the lead-acid battery 18 that is being regenerated (the raised portion with reference character PV in FIGS. 2 and 3), a large amplitude appears on the negative side of the voltage, which is followed by an unstable voltage waveform with a small amplitude. Thereafter, appearing as a resonance phenomenon in the lead-acid battery 18 are a fundamental frequency band F1 and a harmonic band F2 following the fundamental frequency band F1. The fundamental frequency band F1 includes a first harmonic (e.g., 2 MHz in this embodiment). The harmonic band F2 includes a third or higher harmonic (e.g., the third harmonic of 6 MHz in this embodiment, the upper limit is the fifth harmonic of 10 MHz) of the first harmonic (i.e., the fundamental harmonic). The first harmonic and the third or higher harmonic attenuate over time. As shown in FIGS. 2 and 3, it takes about 5 µs from one application of the pulse voltage PV to a substantial disappearance of the amplitude of the harmonic band F2. According to the present invention, the fundamental frequency band F1 and the subsequent harmonic band F2, which are resonant waveforms generated after an application of the pulse voltage PV, are collectively referred to as a "resonant harmonic waveform". This term "resonant harmonic waveform" means a waveform that appears only in a case of application of a specific pulse voltage and is a phenomenon observed in most lead-acid batteries unless deteriorated too much. As described above, the lead-acid battery regeneration device 100 generates the resonant harmonic waveform in the lead-acid battery 18 that is being regenerated, which allows for high-speed regeneration of not only large-capacity lead-acid batteries but also any type of lead-acid batteries. According to the present invention, once the pulse voltage PV is applied, a resonance phenomenon occurs in the lead-acid battery 18. The fundamental frequency band F1 and the subsequent harmonic band F2 of the resonance phenomenon as well as the shift of frequencies from the fundamental frequency band F1 to the harmonic band F2 are believed to be not controlled or adjusted by the regeneration device 100 but caused by the resonance of the lead-acid battery 18 itself.

When no resonance phenomenon occurs in the lead-acid battery 18, the voltage has a simple constant frequency having a damped oscillatory wave and does not change (or shift) halfway as described above. Accordingly, the presence or absence of a resonant waveform can be checked by observing the oscilloscope waveform between the positive and negative electrodes of the lead-acid battery 18.

As the regeneration process of the lead-acid battery 18 with the lead-acid battery regeneration device 100 proceeds, the crest of the rising waveform lowers due to a decrease in the internal resistance value of the lead-acid battery 18. In addition, as the regeneration process of the lead-acid battery 18 with the lead-acid battery regeneration device 100 proceeds, the trough of the falling waveform also lowers due to an increase in the discharge capacity of the lead-acid battery 18. The completion of the regeneration of the lead-acid battery 18 can be determined based on a waveform with a completely lowered crest or trough (i.e., stop of the change). In a case of checking the completion of the regeneration at the lead-acid battery 18, the voltage and the internal resistance value of the lead-acid battery 18 may be measured after the completion of the regeneration so as to check whether or not a rise of the voltage and a drop of the internal resistance value occur.

It is suitable to regenerate the lead-acid battery 18 using the lead-acid battery regeneration device 100, while the lead-acid battery 18 is being charged by the charge circuit 23. Accordingly, the white lead sulfate generated at the electrodes inside the lead-acid battery 18, which may causes deterioration, is peeled off by the regenerating electric power, and then reduced to lead and dilute sulfuric acid by the charging current at the same time.

As a result, the lead-acid battery 18 can be regenerated in a shorter time.

A typical regeneration device for a lead-acid battery mainly uses a method utilizing a back electromotive force occurring when a coil current is cut off or of a type applying high-frequency power to a storage battery. The present invention uses a resonance regeneration method, i.e., a method of charging a capacitor with a high voltage and applying a pulse voltage to a lead-acid battery, in which the lead-acid battery itself generates a resonant harmonic (an Nth harmonic).

As described above, the lead-acid battery regeneration device 100 is capable of electrochemically decomposing and reducing a crystallized lead sulfate insulator (sulfation) of electrodes of the lead-acid battery 18 by causing a resonance phenomenon in the lead-acid battery 18, thereby making it possible to regenerate the lead-acid battery 18 in a short time.

The embodiment of the present invention has been described above, which is a mere example for implementing the present invention. The present invention is thus not limited to the embodiment described above which can be modified as appropriate for implementation within the scope and spirit of the present invention.

### INDUSTRIAL APPLICABILITY

The present invention is applicable to a lead-acid battery regeneration device that removes the crystallized lead sulfate on electrode surfaces of a lead-acid battery to regenerate the

### DESCRIPTION OF REFERENCE CHARACTERS

- 100: Lead-Acid Battery Regeneration Device
- 17: Charge Circuit
- 18: Lead-Acid Battery
- 19: Discharge Switch Circuit
- 30: Series Resonant Circuit

## Claims

1. A lead-acid battery regeneration device for regenerating a lead-acid battery by electrochemically decomposing and reducing a crystallized lead sulfate insulator of the lead-acid battery, the lead-acid battery regeneration device comprising:
a charge circuit that includes a capacitor and is configured to apply electric charge to the capacitor; and
a discharge switch circuit configured to apply a pulse voltage to the lead-acid battery by controlling ON/OFF of the charge circuit,
the charge circuit, the lead-acid battery, and the discharge switch circuit being connected in series to constitute a series resonant circuit,
one application of the pulse voltage with a predetermined frequency to the lead-acid battery causing a resonance phenomenon of an Nth-order harmonic in the lead-acid battery where N is an integer greater than or equal to one, the lead-acid battery regeneration device regenerating the lead-acid battery by repeatedly performing the application of the pulse voltage to the lead-acid battery.

2. The lead-acid battery regeneration device of claim 1, further comprising:
a charge circuit configured to charge the lead-acid battery with electric power of a predetermined power supply, wherein
the lead-acid battery is regenerated while being charged by the charge circuit.

3. The lead-acid battery regeneration device of claim 1 or 2, wherein
in the lead-acid battery after being applied with the pulse voltage, the resonance phenomenon includes: a fundamental frequency band including a first harmonic of the Nth-order harmonic; and a harmonic band following the fundamental frequency band and including a third or higher harmonic of the first harmonic, the first harmonic and the third or higher harmonic attenuating over time.
